# EUROPEAN PATENT APPLICATION

(11) **EP 2 360 924 A1**
(43) Date of publication of application: **24.08.2011**
(21) Application number: 10382008.0
(22) Date of filing: 18.01.2010
(51) Int. Cl.: H04N 7/24

(54) **A digital multimedia data transmission device and method**

(71) Applicant: Alcatel-Lucent España, S.A., 28045 Madrid (ES)
(72) Inventor: Villegas Nuñez, Alvaro, 28045 MADRID (ES); Aparicio, David, 28045 MADRID (ES); Laxine, Alexei, 28045 MADRID (ES)
(74) Representative: Elzaburu Marquez, Alberto

(57) **Abstract**

A multimedia digital data transmission device which may respond to a request message from a second segment of a second operational data stream in fast forward or rewind mode (trick mode), associated with a first data stream of a selected multimedia digital content transmitted from a client device (13) through a communications network (11) based on an internet protocol; in which the transmission device (12) comprises a data slicing unit (16) which generates a second segment by means of a different coding or through extraction of a plurality of frames included in a specific number of first segments of the first data stream of a selected digital multimedia content, and in which the length of the second segment is equal to the length of a specific whole number of first segments.

## Description

### SCOPE OF THE INVENTION

This invention refers, in general, to a procedure and device for transmitting multimedia digital data in fast forward or rewind mode.

### STATE OF THE ART

At the present time a multimedia service provider supplies certain multimedia contents on demand from a server medium applicable to the client's device such as a decoder interface device through an internet protocol communications network.

When the client has selected an audiovisual content, a request message is transmitted, which includes identification data of the selected content, from the client's device to the applicable server. The server responds to the request message by transmitting a data stream corresponding to the selected content.

The data stream with the selected audiovisual content may be sent through the IP communications network by means of various communication protocols such as UDP, RTP on UDP, HTTP on TCP or others.

Therefore, the IP communications network transports multimedia data streaming which is continuously transmitted to the client's device, so that they are reproduced on a multimedia screen connected thereto.

The playback of the downloaded data is made at normal viewing speed. Nevertheless, the client may vary the speed of forward play, fast forward, or back, rewind, emitting a message to the server of variation of the play speed of the downloaded data.

The messages sent from the client to the server in order to select the audiovisual content and subsequent control of playback may also be transmitted on various communications protocols such as RTSP, HTTP or others.

The mode of playback at a speed other than that of normal viewing of downloaded data in a client's device is known as trick mode.

Current procedures for playback of video streaming require a previous reserve of band width capacity in order to ensure that the client's experience is satisfactory.

In cases in which the capacity reserve is not possible or where the quality of the reserve is not sufficient clients may increase their memory reception size (buffer) and delay the start of playback in such a way that fluctuations in the IP network during viewing of the content can be partially absorbed. Nevertheless, a prolonged reduction in bandwidth in the IP network may stop playback as a result of emptying the buffer.

In order to mitigate the effects of the aforementioned disadvantage of fluctuations in the IP network, a server may use an adaptable communications protocol in order to supply multimedia content to various types of binary speeds (bitrates), so that the client may request transmission of video streaming according to the different types of bitrates based on the conditions of the IP network, including in the middle of playback and without there being any interruptions or visible effects on an audiovisual screen during a change of bitrate.

Some adaptable communications protocols are known in the art which are based on the HTTP protocol on TCP/IP and are used for sending multimedia content.

Adaptable protocols segment a content to be broadcast into equal bits of various seconds and they codify and/or compress each bit at different bit rates, so that the bits of consecutive segments at different bitrates may be concatenated in order to play them on a client's device without any visible effect for the client during playback on the audiovisual screen.

Therefore, the client selects the transmission bitrate of the following segment to an adjacent one, which is currently playing, within the bitrates available in the server according to the status of the IP network at any given time.

### DESCRIPTION OF THE INVENTION

This invention seeks to resolve or reduce one or more of the disadvantages described previously by means of a procedure and transmission device for multimedia digital data as defined in the claims.

In accordance with an embodiment, a server medium is represented which is able to generate and transmit to a client's device, through a communications network based on an internet protocol, a second data stream operating in fast forward or rewind namely, in trick mode corresponding to a first operating data stream at normal play speed of a selectable digital multimedia content, where the second trick mode data stream comprises an ordered succession of second segments of equal length, in which a second segment includes a plurality of frames included in a specific number of first segments of the first data stream and in which a second segment may have a different type of transmission speed with respect to a first section previous and subsequent thereto, so that every second segment may be viewed on an audiovisual screen by a client.

The second multimedia trick mode data stream, fast forward or rewind, is obtained through an adaptable communications protocol mechanism in a manner similar to the way the first data stream is generated for playback mode at normal speed.

Consequently, the second multimedia data stream in trick mode is segmented in bits of content (play time) of short duration which may be received and reassembled in the client's device without any appreciable effect on the screen.

In turn, the segmentation of the second data stream in trick mode into play segments is made in a coordinated manner with the segmentation of the content of the first multimedia data stream in normal playback, so that a whole number and K constant of first playback segments generated at normal speed are equivalent in content time or in elapsed image time, to a second segment of the second data stream in trick mode.

The second data stream in trick mode may comprise a second data stream by type of trick mode, that is, a first mode for fast forward and a second mode for rewind.

The server may generate each type of second data stream in trick mode independently of the first data stream of selectable multimedia digital content, that is, without having previously received a request message from a second segment of the second data stream in trick mode and/ or which may be generated as a response to a request message from a second segment of the second data stream in trick mode received during playback of a first selectable data stream.

A second segment in inverse direction or rewind of the trick mode data stream, contains the same frames as the typical second segment equivalent in fast forward direction however ordered in reverse direction.

However, the second rewind segments are a normal multimedia sequence which is received and presented to the client in transparent form. In other words, the video decoder does not know that the subjective order of the frames is inverse, it simply presents the frames in the order in which they were introduced in the coded segment.

The server may generate and supply a same content at different transmission speeds (bitrates) in both directions of the second data stream in trick mode.

Therefore, the server generates and stores a list of speeds which it is able to offer to clients so that during playback of the first data stream this may be transmitted at different speeds at the client's request, the client will simply request the following segment corresponding to a different speed from the second data stream in trick mode which is downloaded and shown on the screen.

The server may operate in different modes, that is, the files of those which obtain the data streams in trick mode may be stored in the server independently from the files of those which obtain the data streams in normal playback, or they may be in the same file.

The server is able to previously generate and store the different types of second data stream in trick mode or it may generate data in real time on the basis of normal play data stream files or other trick mode files.

All the second segments of the second data stream in trick mode should begin with a random access point, so that their presentation in a client's device may be made without any need for any kind of previous segment.

Streaming in trick mode, like normal playback streaming may be coded several times at different bitrates, so that the client can select the desired bitrate in real time according to the conditions of the IP network.

The access mechanisms, including the data required to access the second multimedia data streaming in trick mode and its temporary relation with the first data stream in normal playback, are included in a set of metadata associated with the multimedia content.

When the client wishes to pass from normal play mode to a trick mode, a message is issued for change to trick mode which is received in the client's device which calculates the first segment corresponding to a second segment of the second stream in trick mode which should be requested dividing the current segment number of the first normal playback streaming by the K factor of the trick mode which it wishes to skip.

When the client wishes to pass from a trick mode to the normal playback mode, the client's device calculates the first segment which it should request from the first normal playback stream multiplying the current segment number in the trick mode stream by the K factor of the trick mode.

As a result of the foregoing, the client may operate in trick mode in an efficient and effective manner thus providing an experience identical to the conventional or non-adaptable case and with an equivalent scalability.

### BRIEF DESCRIPTION OF THE FIGURES

A more detailed explanation of the invention is given in the following description based on the attached figures in which:

figure 1 shows a general diagram of a connection between a server medium and client devices,

figure 2 shows a diagram of a segmentation of an operational datastream at normal play speed of a digital multimedia content.

figure 3 shows a diagram of a segmentation in fast forward mode of the operational data stream in trick mode.

figure 4 shows a diagram of a segmentation in fast rewind mode of the operational data stream in trick mode and,

figure 5 shows a diagram of the change from operational data stream at normal play speed to fast forward mode of the operational data stream in trick mode.

### EMBODIMENTS OF THE INVENTION

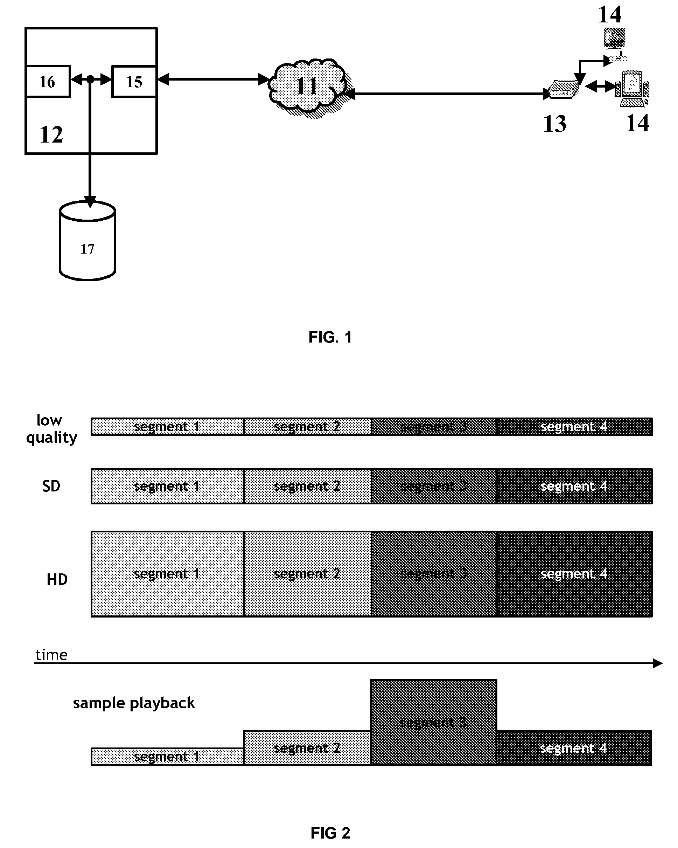

Figure 1 shows a network 11 of internet protocol communications which communicates a server medium 12 with a plurality of client devices 13.

The server 12 transmits in response to a message of selection of a selectable multimedia content an operational data stream at normal playback speed to a requesting client device 13 through a communication channel of the IP network 11.

The multimedia contents are storable in a storage unit to which the server 12 has access in order to recover the multimedia content selected by the client. Therefore, the client may view a selectable multimedia content as desired, namely video on demand or VoD).

In relation now to figures 1 and 2, the server 12 in response to the request message for multimedia video received from a client device 13, recovers the set of metadata associated with the desired multimedia content and transmits said set to the requesting client's device 13 as a digital data stream, that is, the server 12 sends to the client's device 13 the information necessary for it to recognise the composition of the multimedia content, and therefore, it may request bits that comprise the multimedia content selected and at a bitrate based on the bandwidth available in the IP network 11 at any given time.

The server 12 includes a coder unit 15 and a data slicing unit 16 so that the coder 15 receives the first data stream in order to codify it and compress it and supply a coded stream to the data slicer 16 which segments the compressed video data stream corresponding to the multimedia content selected in a plurality of first segments, corresponding to periods of equal play time, at a determined bitrate, and where each first segment begins at a random access point.

The plurality of first segments are stored in a storage unit 17 connected to the server 12.

The aforementioned operation is repeated for each transmission bitrate available in the server 12 giving as a result a set of first segments with different types of bitrates.

Figure 2 shows three different types of bitrates corresponding to low quality, standard definition SD) and high definition HD and in the lower part of figure 2, a sample playback stream, is shown transmitted from the server 12 to the client's device 13 where each first segment may be transmitted to a different bitrate on request thereof.

Therefore, a specific number of consecutive segments corresponds to a specific period of playback time of the multimedia content, that is, to a specific number of seconds of multimedia video play selected. Each segment of the first data stream at normal playback speed is decoded independently of a preceding segment and of a subsequent segment.

For example, if the video coding method is the standard MPEG2, each segment will always begin by an intra I frame, whereas if the video coding method is the standard H.264, AVC, each segment will always begin with an IDR frame.

Therefore, in relation to figure 2, the download speed or bitrate of each first independent consecutive segment may be different, with the bitrate selected by the client device 13 based on the available bandwidth in the communications channel established at any time on the IP network 11.

It should be noted that at low bitrate the quality of playback of the multimedia video segment is reduced, and vice versa, at high bitrate download playback and client experience is improved.

The server 12 transmits each first segment to the client device 13 according to the transfer protocol of hypertext, HyperText Transfer Protocol HTTP, on the set of TCP/IP protocols.

HTTP defines the syntax and semantics which use the programming elements (software) of a web architecture, clients, servers, proxies in order to communicate. The protocol is oriented towards transactions and follows a request-response pattern between the client device 13 and the server 12. A transmitted segment is a resource which is identified by means of a uniform resource localiser or URL.

Consequently, as each segment is downloaded in the client's device 13, it is played at normal playback speed on a visual display unit 14 connectable to the client's device 13, so that it can be shown to the client.

The server 12, furthermore, may also generate a set of second segments which comprise a second multimedia data stream in trick mode corresponding to the same selectable multimedia content for different binary speeds and transmission bitrates.

The data slicer 15 generates, on the basis of files coded specifically as trick mode by the coder 15, a plurality of second segments through typical mode of second data stream in trick mode, that is, a first plurality of second segments for the fast forward mode and a second plurality of second segments for the fast rewind mode.

The two types of second segments corresponding to the data stream in trick mode may be stored in the memory 17.

In another embodiment, the second segments corresponding to the data stream in trick mode may be generated in real time by the data slicer 16 based on segments of the first data stream of normal playback stored in the memory 17, after the server 12 has received a request message from a second segment of the second data stream in trick mode calculated by the client's device 13.

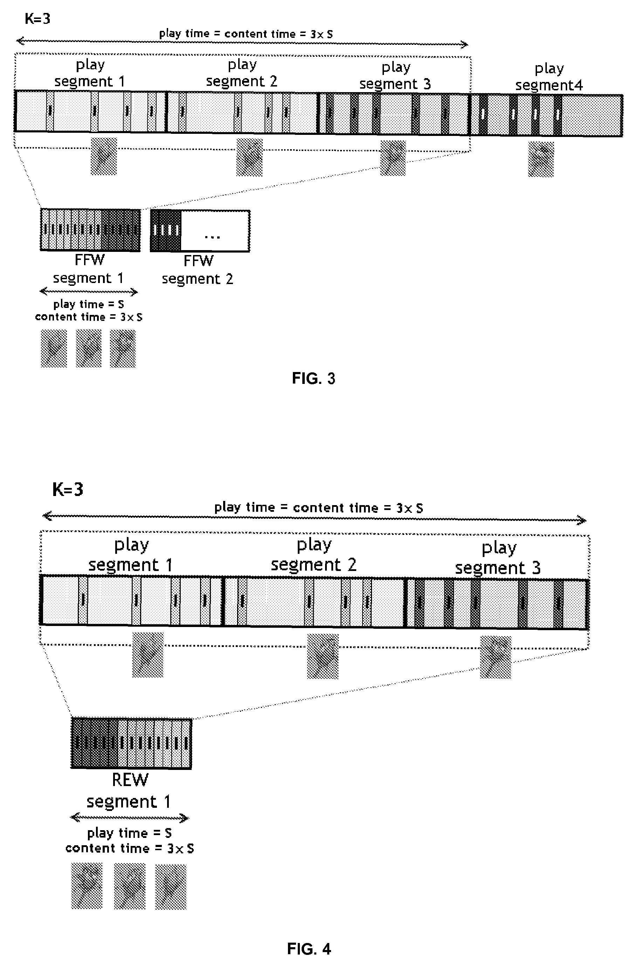

With respect to figure 3, it may be seen that a second segment of a trick mode streaming corresponds to a whole number K=3 of segments of normal playback streaming in content time (play time S).

For example, a second FFW segment of the trick modes stream includes frames corresponding to the three first segments of normal playback stream, consequently the fast forward mode provides a playing speed three times the normal playing speed.

For example, in order to show a specific interval of time T of content in fast forward mode N on the screen, second segments of the second stream in trick mode are required.

However, the presentation of the same interval of time T of content in normal playback mode would require K x N first segments; it should be recalled that a second segment comprises K first segments.

It should be noted that the real time elapsing for the viewer during the presentation of the interval of time T will be K times less in trick mode, both in fast forward or rewind mode, than in normal playback mode.

Figure 4 shows an REW segment corresponding to a fast rewind mode where it is shown that the frames in its interior are ordered in inverse mode with respect to the normal playback mode.

The second segments of the trick mode stream contain in general only video, non audio, and may have a video frame rate less than the value in normal play.

When the user executes a play command at a different speed from normal play speed, namely trick mode, the client's device includes a request unit 17 which receives the command and executes a local application in order to calculate, with the assistance of the metadata associated with the selected multimedia content and which were downloaded at the start of the video on demand session, which is the following content or play segment of the normal playback stream which it would correspond to subsequently download if the user had not executed the command to change to trick mode.

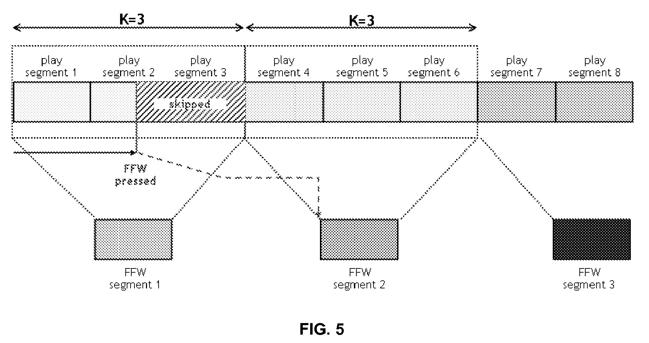

With respect to figure 5, when the client wishes to pass from normal playback mode to a trick mode, it issues a message for change to trick mode which is received in the client's device which calculates the first segment corresponding to a second segment of the second stream in trick mode which should be requested by dividing the current segment number of the first normal play streaming by the K factor of the trick mode which it is desired to skip.

When the client wishes to pass from a trick mode to the normal playback mode, the client's device 13 calculates the first segment which should request from the first normal playback stream multiplying the current segment number in the trick mode stream by the K factor of the trick mode.

Depending on the speed of the trick mode selected by the user with the command, for example, x8, x12, x24, etc., the local application calculates the segment equivalent to that which corresponds to the current position within the trick mode stream corresponding to the chosen speed. Depending on the structure of the segments this calculation may be reduced to an entire division.

When the first segment to be downloaded from the trick mode stream has been defined, the desired bitrate is selected, in the event that the trick mode at the chosen speed offers more than one bitrate, and its download begins using the same procedure as for a first segment of the first normal playback stream.

In general, when passing to trick mode the application should inform the local video decoding device 13, in order to avoid undesirable error messages, as during a trick mode emptying of the video decoding buffer is possible without this affecting the subjective quality of the decoding.

The multimedia digital data transmission procedure for responding to a request message of a second segment of a second operating data stream in fast forward mode or rewind (trick mode), transmitted from a client's device 13 to a multimedia digital data transmission device through a communications network 11 based on an internet protocol, may be made by a computer, loadable within an internal memory of a computer with entry and exit units and also with processor units.

For this purpose the computer programme includes codes which are configured to execute the steps of the aforementioned process when it is executed by the computer. In addition, the executable codes may be recorded in a readable carrier medium within a computer.

## Claims

1. **A multimedia digital data transmission device** which may respond to a request message of a second segment of a second operational data stream in fast forward or rewind mode (trick mode), associated with a first data stream of a selected multimedia digital content transmitted from a client's device (13) through a communications network (11) based on an internet protocol; **characterised in that** the transmission device (12) comprises a data slicing unit (16) which generates a second segment by means of a different coding or through extraction of a plurality of frames included in a specific number of first segments of the first data stream of a selected digital multimedia content, and in which the length of the second segment is equal to the length of a specific whole number of first segments.

2. **Device** in accordance with claim 1; **characterised in that** the second operational data stream in fast forward or rewind mode includes the second segments generated by the data slicing unit (16).

3. **Device** in accordance with claim 2; **characterised in that** the second segment may be coded to a different type of transmission speed or bitrate with respect to a second segment prior to and/or subsequent to the same.

4. **Device** in accordance with claim 1 or 3; **characterised in that** the data slicing unit (16) may generate the second data stream in trick mode associated with the type of play in fast forward mode or fast rewind, in real time following reception of a request message transmitted from the client device (13).

5. **Device** in accordance with claim 1 or 3; **characterised in that** the data slicing unit (16) may generate a second data stream in trick mode associated with the type of playback in fast forward mode, in the absence of a request message transmitted from the client's device (13), with the second data stream in fast forward mode being stored in a storage unit (17).

6. **Device** in accordance with claim 1 or 3; **characterised in that** the data slicing unit (16) may generate a second data stream in trick mode associated with the type of playback in fast rewind mode, in the absence of a request message transmitted from the client device (13), with the second data stream in fast rewind mode being stored in a storage unit (17).

7. **Client device** which transmits a request message from a second segment of a second operational data stream in fast forward or rewind (trick mode), associated with a first data stream of a selected digital multimedia content to a digital multimedia data transmission device (12) through a communications network (11) based on an internet protocol; **characterised in that** the client device (13) may calculate which second segment of a second data stream in trick mode is required and the same is requested from the transmission device (12).

8. **A method for multimedia digital data transmission** in response to a request message of a second segment of a second operational data stream in fast forward or rewind mode (trick mode), associated with a first data stream of a selected multimedia digital content transmitted from a client device (13) through a communications network (11) based on an internet protocol; **characterised in that** the method comprises generation of a second segment by means of a data slicing unit (16) through extraction of a plurality of frames included in a specific number of first segments relating to the first data stream of a selected digital multimedia content, and in which the length of the second segment is equal to the length of a specific whole number of first segments.

9. **Method** in accordance with claim 8; **characterised in that** the second operational data stream in fast forward or rewind mode includes the second segments generated by the data slicing unit (16).

10. **Method** in accordance with claim 8; **characterised in that** the second segment may be coded at a different type of transmission speed or bitrate with respect to a second segment prior to and/or subsequent to the same.

11. **Method** in accordance with claim 8 or 10; **characterised in that** the data slicing unit (16) may generate the second data stream in trick mode associated with the type of play in fast forward mode or fast rewind, in real time following reception of a request message transmitted from the client device (13).

12. **Method** in accordance with claim 8 or 10; **characterised in that** the data slicing unit (16) may generate a second data stream in trick mode associated with the type of play in fast forward mode, in the absence of a request message transmitted from the client device (13), with the second data stream in fast forward mode being stored in a storage unit (17).

13. **Method** in accordance with claim 8 or 10; **characterised in that** the data slicing unit (16) may generate a second data stream in trick mode associated with the type of playback in fast rewind mode, in the absence of a request message transmitted from the client device (13), with the second data stream in fast rewind mode being stored in a storage unit (17).

14. **A computer programme** may be uploaded in an internal memory of a computer with entry, exit units and a processing unit, in which the computer programme comprises executable codes configured to carry out the steps of digital multimedia data transmission in order to respond to a request message of a second segment of a second operational data stream in fast forward or rewind (trick mode) associated with a first data stream of a selected multimedia digital content transmitted from a client's device (13) through a communications network (11) based on an internet protocol in accordance with claims 8 to 13.
